# DEMANDE DE BREVET EUROPEEN

(11) **EP 2 223 794 A1**
(43) Date de publication de la demande: **01.09.2010**
(21) Numéro de dépôt: 10153612.6
(22) Date de dépôt: 15.02.2010
(51) Int. Cl.: B29C 65/56, F21V 17/00

(54) **Assemblage pour un dispositif optique, notamment pour véhicule automobile**

(30) Priorité: 25.02.2009 FR 0900848
(71) Demandeur: VALEO VISION, 93012 Bobigny (FR)
(72) Inventeur: Teba, Daniel, 23600 Martos (ES); Lara, Alberto, 23650 Torredonj (ES)

(57) **Abrégé**

L'invention concerne un assemblage (1) pour un dispositif optique, notamment pour véhicule automobile, tel qu'un dispositif d'éclairage ou de signalisation, comportant :
- un boîtier (2) agencé pour recevoir au moins une source lumineuse,
- une glace (3) agencée pour fermer sensiblement le boîtier,
- une pièce (4) distincte du boîtier et de la glace, et différente d'une colle,

l'assemblage étant caractérisé par le fait qu'il comporte au moins un élément de fixation (5) pénétrant dans l'épaisseur du boîtier, celle de la glace et celle de la pièce distincte pour assurer une fixation de ceux-ci ensemble.

## Description

L'invention concerne notamment un assemblage pour un dispositif optique, notamment pour véhicule automobile

On connaît par la demande de brevet DE 43 10 048 un projecteur de véhicule automobile comprenant une glace montée sur un corps de support du projecteur. La liaison primaire de la glace avec le corps est constituée au moyen d'une colle, d'un ciment ou d'un autre agent d'étanchéité qui est déposée dans une rainure en U formée à la périphérie du corps. La position fixe de la glace par rapport au corps est assurée au moyen de broches, de vis ou de pinces.

On connaît par ailleurs par le brevet FR 2 850 732 un projecteur comprenant un corps et une glace collée sur le corps. L'étanchéité et l'arrêt primaire de la position de la glace dans le corps sont assurés par la masse de colle. L'arrêt secondaire de la position de la glace dans le corps a lieu au moyen de tirs d'organes d'arrêt depuis un côté extérieur de l'aile du boîtier. Ces organes d'arrêt sont fabriqués à partir de fils métalliques et pliés en forme de U.

Enfin le brevet JP 3-207635 décrit un assemblage de projecteur de véhicule automobile.

Dans les modes de réalisation connus ci-dessus, la glace est assemblée avec le boîtier du projecteur en utilisant une colle pour notamment rendre étanche la jonction.

Il existe un besoin pour un nouvel assemblage pour un dispositif optique, notamment lorsque un nombre relativement élevé de pièces sont à assembler.

L'invention a ainsi pour objet un assemblage pour un dispositif optique, notamment pour véhicule automobile, tel qu'un dispositif d'éclairage ou de signalisation, comportant :
- un boîtier agencé pour recevoir au moins une source lumineuse,
- une glace agencée pour fermer sensiblement le boîtier,
- éventuellement une pièce distincte du boîtier et de la glace, et différente d'une colle ou d'un joint par exemple en caoutchouc,
l'assemblage étant caractérisé par le fait qu'il comporte au moins un élément de fixation pénétrant dans l'épaisseur du boîtier, celle de la glace et celle de la pièce distincte éventuelle pour assurer une fixation de ceux-ci ensemble.

L'invention permet d'assembler de manière simple un nombre relativement élevé, par exemple trois ou plus, de pièces.

De préférence, le boîtier et la glace comportent chacun une zone d'assemblage, ces zones venant en appui l'une contre l'autre et l'élément de fixation étant mis en place dans ces zones, ces zones d'assemblage étant de préférence non planes, à savoir en trois dimensions, ces zones étant par exemple courbes suivant les trois dimensions.

L'élément de fixation permet par exemple d'assurer un positionnement relatif précis des différents éléments, qui peuvent sinon glisser l'un par rapport à l'autre du fait des formes 3D.

La pièce distincte est notamment choisie parmi l'un des éléments suivants :
- un masque (par exemple un cadre ou un enjoliveur),
- un écran optique (par exemple une lentille telle qu'une lentille de Fresnel, une lentille colorée, un collimateur),
- un réflecteur.

Dans un exemple de mise en oeuvre de l'invention, la pièce distincte du boîtier et de la glace est réalisée en métal, et le boîtier et la glace sont eux réalisés en matériaux plastiques.

En variante, le boîtier, la glace et la pièce distincte peuvent être tous réalisés en matériaux plastiques.

La pièce distincte peut être interposée entre le boîtier et la glace.

Dans un exemple de mise en oeuvre de l'invention, l'un au moins du boîtier, de la glace et de la pièce distincte comporte au moins une portion de positionnement agencée pour permettre leur positionnement relatif.

Par exemple, l'un du boîtier, de la glace et de la pièce distincte comporte au moins un renfoncement agencé pour coopérer avec une portion en saillie d'un autre du boîtier, de la glace et de la pièce distincte pour permettre un positionnement relatif.

Avantageusement l'un au moins du boîtier, de la glace et de la pièce distincte éventuelle comporte une face extérieure présentant une déplétion en épaisseur à l'endroit où l'élément de fixation pénètre dans cette face extérieure afin que cet élément de fixation ne déborde pas de la face pour ne pas constituer un point d'accrochage susceptible par exemple de blesser accidentellement une personne.

Encore avantageusement l'un au moins du boîtier, de la glace et de la pièce distincte éventuelle comporte une face extérieure présentant une surépaisseur afin que l'élément de fixation qui pénètre dans son épaisseur ne fasse pas saillie hors de cette face pour ne pas constituer un point d'accrochage susceptible par exemple de blesser accidentellement une personne.

Dans un exemple de mise en oeuvre de l'invention, l'assemblage comporte une pluralité d'éléments de fixation pénétrant dans l'épaisseur du boîtier, celle de la glace et celle de la pièce distincte éventuelle pour assurer une fixation de ceux-ci ensemble.

Ces éléments de fixation peuvent présenter des longueurs différentes ou, en variante, une longueur identique.

L'élément de fixation peut comporter une tête et une tige.

La tige peut présenter une section transversale sensiblement polygonale, notamment rectangulaire, éventuellement carrée, pour un meilleur rangement dans un rack.

Dans un exemple de mise en oeuvre de l'invention, l'élément de fixation comporte au moins une rainure sur la tige, la rainure s'étendant sur au moins une portion d'un pourtour de celle-ci, notamment, le cas échéant, sur un côté de la section rectangulaire de la tige.

Les rainures servent notamment à améliorer l'accrochage du plastique qui, en fonction du frottement, permet sa fusion partielle autour de la tige.

La tige peut comporter une pluralité de rainures, notamment parallèles, à différentes distances d'une extrémité de la tige.

La longueur de l'élément de fixation peut être comprise par exemple entre 8 mm et 12 mm.

La tête de l'élément de fixation comprend un côté de longueur comprise par exemple entre 1.2 mm et 1.6 mm.

La tige de l'élément de fixation comprend un côté de longueur comprise par exemple entre 0.7 mm et 0.9 mm.

L'élément de fixation peut être réalisé en métal, notamment en acier.

L'invention a encore pour objet, indépendamment ou en liaison avec ce qui précède, un assemblage pour un dispositif optique, notamment pour véhicule automobile, tel qu'un dispositif d'éclairage ou de signalisation, l'assemblage comportant au moins deux pièces à assembler, l'assemblage étant caractérisé par le fait qu'il comporte au moins un élément de fixation pénétrant dans l'épaisseur des pièces à assembler, ces pièces comportant chacune une zone d'assemblage, ces zones venant en appui l'une contre l'autre et l'élément de fixation étant mis en place dans ces zones, ces zones d'assemblage étant de préférence non planes. Ces pièces à assembler peuvent par exemple être distinctes d'un boîtier ou d'une glace d'un projecteur de véhicule automobile, étant par exemple des pièces montées à l'intérieur du projecteur. Ces pièces peuvent par exemple être un filtre transparent et un masque. En variante, ces pièces à assembler peuvent être trois masques différents.

L'invention a également pour objet un élément de fixation comportant une tête et une tige, la tige présentant une section transversale sensiblement rectangulaire, avec notamment au moins une pluralité de rainures sensiblement parallèles, distinctes d'un filetage.

L'invention a encore pour objet un procédé pour réaliser un assemblage pour un dispositif optique, notamment pour véhicule automobile, tel qu'un dispositif d'éclairage ou de signalisation, comportant :
- un boîtier agencé notamment pour recevoir au moins une source lumineuse,
- une glace agencée pour coopérer avec le boîtier,
- éventuellement une pièce distincte du boîtier et de la glace, et différente d'une colle,
le procédé comprenant l'étape consistant à faire pénétrer au moins un élément de fixation dans l'épaisseur du boîtier, celle de la glace et celle de l'éventuelle pièce distincte pour assurer une fixation de ceux-ci ensemble, ce procédé pouvant être mis en oeuvre de manière automatique ou de manière manuelle.

Le procédé peut comporter l'étape suivante :
- après mise en place de l'élément de fixation, appliquer entre le boîtier et la glace une colle.

Ce procédé permet de maintenir en place les différents éléments dans un positionnement relatif précis, avant et pendant l'application d'une colle.

L'invention concerne également une machine pour la mise en oeuvre du procédé ci-dessus.

Dans un exemple de mise en oeuvre de l'invention, la machine comporte un pistolet, notamment de type pneumatique, agencé pour éjecter un élément de fixation, la machine comportant en outre en regard du pistolet une zone d'arrêt agencée pour déformer, par exemple en la pliant, une extrémité de l'élément de fixation lors de l'impact, de sorte que, une fois en place dans l'assemblage, l'élément de fixation ne présente pas d'extrémité débordant sur une face de l'assemblage.

La présente invention permet notamment les avantages suivants :
- rapidité du procédé,
- facilité de mise en place,
- fiabilité de l'assemblage,
- machine et outil de faible coût,
- design sur pièce simple,
- contrôle automatique,
- bonne répétitivité du procédé.

L'invention pourra être mieux comprise à la lecture de la description détaillée qui va suivre, d'exemples de mise en oeuvre non limitatifs de l'invention, et à l'examen du dessin annexé, sur lequel :
- les figures 1 à 6 représentent, schématiquement et partiellement, en coupe transversale, des assemblages conformes à différents modes de réalisation de l'invention,
- les figures 7 à 10 illustrent, schématiquement et partiellement, un élément de fixation conforme à l'invention, suivant différentes vues,
- la figure 11 illustre, schématiquement et partiellement, une machine conforme à l'invention, et
- la figure 12 illustre, schématiquement et partiellement, un autre exemple de l'invention.

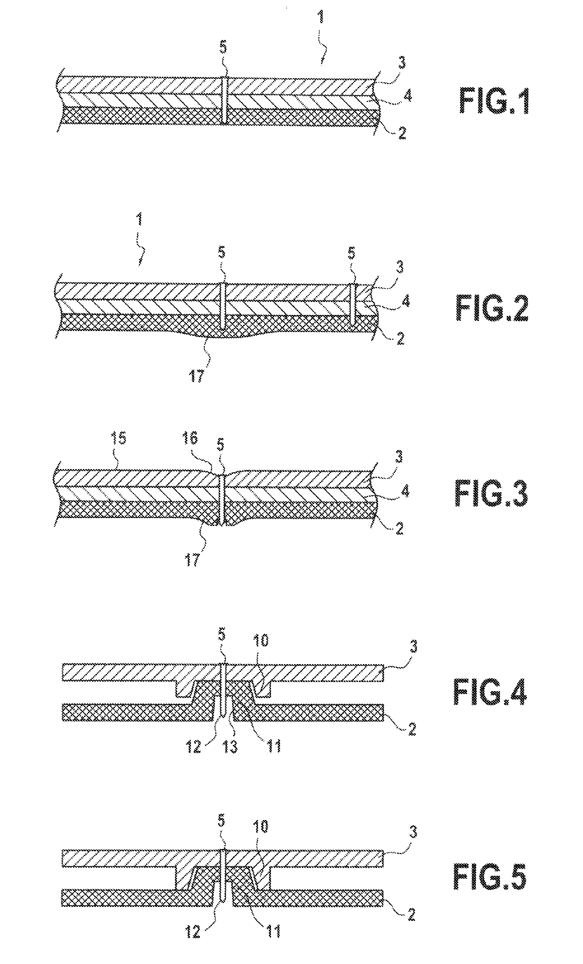

On a représenté sur la figure 1 un assemblage 1 pour un dispositif optique tel qu'un projecteur pour véhicule automobile, comportant :
- un boîtier 2 agencé pour recevoir une source lumineuse, non représentée,
- une glace 3 agencée pour fermer sensiblement le boîtier 2,
- une pièce 4 distincte du boîtier 2 et de la glace 3, et différente d'une colle ou scellement d'étanchéité.

Les parties visibles sur la figure 1 correspondent à des parties périphériques des éléments 2, 3 et 4.

L'assemblage 1 comporte une pluralité d'éléments de fixation 5 pénétrant dans l'épaisseur du boîtier 2, celle de la glace 3 et celle de la pièce distincte 4 pour assurer une fixation de ceux-ci ensemble.

L'élément de fixation 5 sera décrit plus en détail ci-dessous.

La pièce distincte 4 est choisie parmi l'un des éléments suivants :
- un masque (par exemple un cadre ou un enjoliveur),
- un écran optique (par exemple une lentille telle qu'une lentille de Fresnel, une lentille colorée, un collimateur),
- un filtre, par exemple un filtre transparent,
- un réflecteur,
- un socle,
- une platine...

La pièce 4 distincte du boîtier 2 et de la glace 3 est réalisée, dans l'exemple décrit, en métal, et le boîtier 2 et la glace 3 sont eux réalisés en matériaux plastiques.

En variante, le boîtier 2, la glace 3 et la pièce distincte 4 peuvent être tous réalisés en matériaux plastiques.

La pièce distincte 4 est, dans l'exemple décrit, interposée entre le boîtier 2 et la glace 3.

Comme illustré sur les figures 4 et 5 (seuls le boîtier 2 et la glace 3 étant représentés), le boîtier 2 et la glace 3 peuvent comporter chacun au moins une portion de positionnement agencée pour permettre leur positionnement relatif.

Par exemple, la glace 3 comporte un renfoncement ou logement 10 agencé pour coopérer avec une portion en saillie 11 du boîtier 2 pour permettre un positionnement relatif.

Ce renfoncement 10 et cette portion en saillie 11 peuvent présenter des formes complémentaires, étant par exemple tous les deux de forme tronconique.

Dans l'exemple illustré à la figure 4, la hauteur de la portion en saillie 11 est supérieure à celle du renfoncement 10.

En variante, comme illustré sur la figure 5, la hauteur de la portion en saillie 11 est sensiblement égale à celle du renfoncement 10.

Dans les deux cas, l'une des extrémités 12 de l'élément de fixation 5 s'étend dans une cavité 13 ménagée par la portion en saillie 11, sans déborder hors de cette cavité 13.

Ainsi on évite de former un point d'accrochage susceptible de blesser accidentellement une personne.

Dans l'exemple de mise en oeuvre illustré à la figure 3, la glace 3 comporte une face extérieure 15 présentant une déplétion 16, en épaisseur, à l'endroit où l'élément de fixation 5 pénètre dans cette face extérieure 15 afin que cet élément de fixation 5 ne déborde pas de la face 15 pour ne pas constituer un point d'accrochage susceptible par exemple de blesser accidentellement une personne.

Le boîtier 2 comporte une surépaisseur 17 afin que l'élément de fixation 5 qui pénètre dans son épaisseur ne constitue pas un point d'accrochage.

Dans l'exemple de la figure 3, la surépaisseur 17 comporte un bourrelet annulaire.

Dans l'exemple de la figure 2, la surépaisseur 17 comprend un renflement du boîtier 2.

Toujours dans cet exemple de la figure 2, l'assemblage 1 comporte une pluralité d'éléments de fixation 5.

Ces éléments de fixation 5 présentent des longueurs différentes.

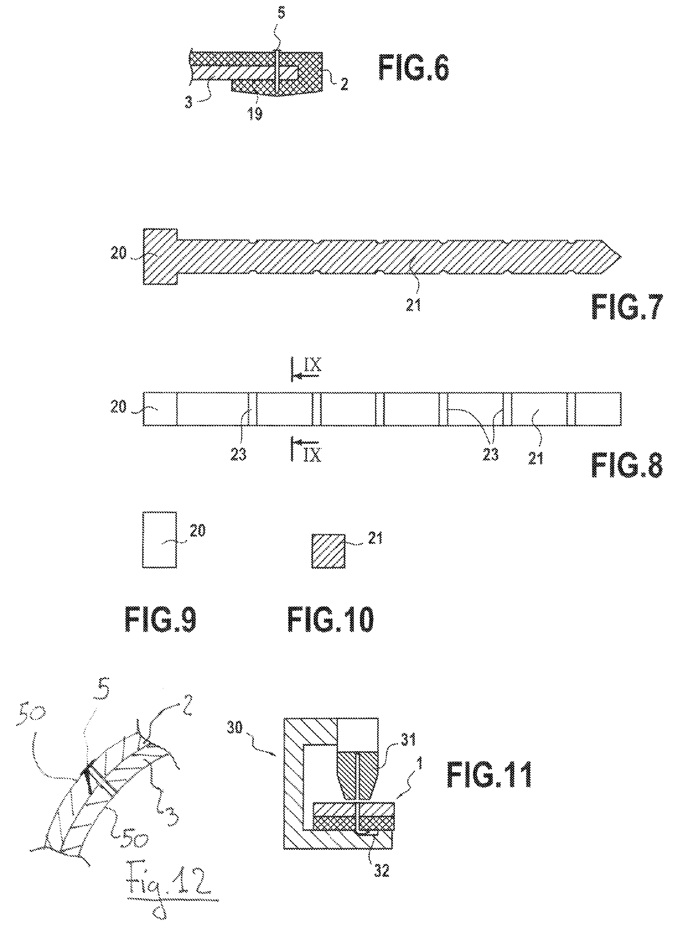

Dans l'exemple de la figure 6, la glace 3 est prise à sa périphérie dans une rainure 19 du boîtier 2, et l'élément de fixation pénètre dans cette rainure 19.

On a représenté sur les figures 7 à 10 l'élément de fixation 5.

Celui-ci comporte une tête 20 et une tige 21.

La tige 21 peut présenter une section transversale sensiblement rectangulaire, éventuellement carrée, pour un meilleur rangement dans un rack.

La tige 21 peut comporter une pluralité de rainures 23 parallèles, à différentes distances d'une extrémité de la tige 21.

Chaque rainure 23 s'étend sur un côté de la section rectangulaire ou carrée de la tige.

Par exemple, sur les quatre côtés de la section rectangulaire ou carrée de la tige 21, seuls deux en regard sont pourvus de rainures 23.

La longueur de l'élément de fixation 5 peut être comprise par exemple entre 8 mm et 12 mm.

La tête 20 de l'élément de fixation 5 comprend un côté de longueur comprise par exemple entre 1.2 mm et 1.6 mm.

La tige 21 de l'élément de fixation comprend un côté de longueur comprise par exemple entre 0.7 mm et 0.9 mm.

L'élément de fixation 5 peut être réalisé en métal, notamment en acier.

On a représenté sur la figure 11 une machine 30 pour mettre en place les éléments de fixation 5 sur l'assemblage 1.

Cette machine 30 comporte un pistolet 31, notamment de type pneumatique, agencé pour éjecter un élément de fixation 5.

La machine 30 comporte en outre en regard du pistolet 31 une zone d'arrêt 32 agencée pour déformer une extrémité de l'élément de fixation 5 lors de l'impact, de sorte que, une fois en place dans l'assemblage 1, l'élément de fixation 5 ne présente pas d'extrémité débordant sur une face de l'assemblage.

Comme illustré sur la figure 12, de préférence, le boîtier 2 et la glace 3 comportent chacun une zone d'assemblage 50, ces zones venant en appui l'une contre l'autre et l'élément de fixation 5 étant mis en place dans ces zones, ces zones d'assemblage étant non planes, à savoir en trois dimensions, ces zones étant par exemple courbes suivant les trois dimensions.

## Revendications

1. Assemblage (1) pour un dispositif optique, notamment pour véhicule automobile, tel qu'un dispositif d'éclairage ou de signalisation, comportant :
- un boîtier (2) notamment agencé pour recevoir au moins une source lumineuse,
- une glace (3) agencée pour fermer sensiblement le boîtier,
- éventuellement une pièce (4) distincte du boîtier et de la glace, et différente d'une colle ou d'un joint en élastomère,
l'assemblage étant **caractérisé par le fait qu'**il comporte au moins un élément de fixation (5) pénétrant dans l'épaisseur du boîtier, celle de la glace et celle de la pièce distincte éventuelle pour assurer une fixation de ceux-ci ensemble, le boîtier et la glace comportant chacun une zone d'assemblage, ces zones venant en appui l'une contre l'autre et l'élément de fixation étant mis en place dans ces zones, ces zones d'assemblage étant de préférence non planes.

2. Assemblage selon la revendication précédente, **caractérisé par le fait que** la pièce distincte (4) est choisie parmi l'un des éléments suivants :
- un masque (par exemple un cadre ou un enjoliveur),
- un écran optique (par exemple une lentille telle qu'une lentille de Fresnel, une lentille colorée, un collimateur),
- un filtre, par exemple un filtre transparent,
- un réflecteur,
- un socle,
- une platine.

3. Assemblage selon l'une quelconque des revendications précédentes, **caractérisé par le fait que** l'un au moins du boîtier, de la glace et de la pièce distincte comporte au moins une portion de positionnement (10 ; 11) agencée pour permettre leur positionnement relatif.

4. Assemblage selon la revendication précédente, **caractérisé par le fait que** l'un du boîtier, de la glace et de la pièce distincte comporte au moins un renfoncement (10) agencé pour coopérer avec une portion en saillie (11) d'un autre du boîtier, de la glace et de la pièce distincte pour permettre un positionnement relatif.

5. Assemblage selon l'une quelconque des revendications précédentes, **caractérisé par le fait que** l'un au moins du boîtier, de la glace et de la pièce distincte comporte une face extérieure présentant une déplétion en épaisseur (16) à l'endroit où l'élément de fixation pénètre dans cette face extérieure afin que cet élément de fixation (15) ne déborde pas de la face pour ne pas constituer un point d'accrochage susceptible par exemple de blesser accidentellement une personne.

6. Assemblage selon l'une quelconque des revendications précédentes, **caractérisé par le fait que** l'un au moins du boîtier, de la glace et de la pièce distincte comporte une face extérieure présentant une surépaisseur (17) afin que l'élément de fixation (15) qui pénètre dans son épaisseur ne fasse pas saillie hors de cette face pour ne pas constituer un point d'accrochage susceptible par exemple de blesser accidentellement une personne.

7. Assemblage selon l'une quelconque des revendications précédentes, **caractérisé par le fait que** l'élément de fixation comporte une tête (20) et une tige (21).

8. Assemblage selon la revendication précédente, **caractérisé par le fait que** la tige (21) présente une section transversale sensiblement polygonale, notamment rectangulaire, éventuellement carrée.

9. Assemblage selon l'une des deux revendications précédentes, **caractérisé par le fait que** l'élément de fixation comporte au moins une rainure (23) sur la tige, la rainure s'étendant sur au moins une portion d'un pourtour de celle-ci, notamment, le cas échéant, sur un côté de la section rectangulaire de la tige (21).

10. Assemblage (1) pour un dispositif optique, notamment pour véhicule automobile, tel qu'un dispositif d'éclairage ou de signalisation, l'assemblage comportant au moins deux pièces à assembler, l'assemblage étant **caractérisé par le fait qu'**il comporte au moins un élément de fixation (5) pénétrant dans l'épaisseur des pièces à assembler, ces pièces comportant chacune une zone d'assemblage, ces zones venant en appui l'une contre l'autre et l'élément de fixation étant mis en place dans ces zones, ces zones d'assemblage étant non planes.

11. Elément de fixation (5) comportant une tête et une tige (21), la tige présentant une section transversale sensiblement rectangulaire, avec notamment au moins une pluralité de rainures sensiblement parallèles, distinctes d'un filetage.

12. Procédé pour réaliser un assemblage pour un dispositif optique, notamment pour véhicule automobile, tel qu'un dispositif d'éclairage ou de signalisation, comportant :
- un boîtier agencé notamment pour recevoir au moins une source lumineuse,
- une glace (3) agencée pour coopérer avec le boîtier (2),
- éventuellement une pièce distincte (4) du boîtier et de la glace, et différente d'une colle,
le procédé comprenant l'étape consistant à faire pénétrer au moins un élément de fixation dans l'épaisseur du boîtier, celle de la glace et celle de l'éventuelle pièce distincte pour assurer une fixation de ceux-ci ensemble, ce procédé pouvant être mis en oeuvre de manière automatique ou de manière manuelle.

13. Procédé selon la revendication précédente, comportant l'étape suivante :
- après mise en place de l'élément de fixation, appliquer entre le boîtier et la glace une colle.

14. Machine pour la mise en oeuvre du procédé selon la revendication précédente.

15. Machine (30) selon la revendication précédente, **caractérisé par le fait qu'**elle comporte un pistolet (31), notamment de type pneumatique, agencé pour éjecter un élément de fixation, la machine comportant en outre en regard du pistolet une zone d'arrêt (32) agencée pour déformer une extrémité de l'élément de fixation lors de l'impact, de sorte que, une fois en place dans l'assemblage, l'élément de fixation ne présente pas d'extrémité débordant sur une face de l'assemblage.
